# EUROPEAN PATENT APPLICATION

(11) **EP 0 539 145 A1**
(43) Date of publication of application: **28.04.1993**
(21) Application number: 92309553.3
(22) Date of filing: 20.10.1992
(51) Int. Cl.: G01C 21/20

(54) **Navigation device**

(30) Priority: 22.10.1991 JP 274342/91
(71) Applicant: PIONEER ELECTRONIC CORPORATION, Meguro-ku Tokyo-to (JP)
(72) Inventor: Araki, Morio, c/o Pioneer Electronic Corp., Kawagoe-shi, Saitama-ken (JP); Arakawa, Takeharu, c/o Pioneer Electronic Corp., Kawagoe-shi, Saitama-ken (JP); Nobe, Kenichi, c/o Pioneer Electronic Corp., Kawagoe-shi, Saitama-ken (JP); Ando, Hitoshi, c/o Pioneer Electronic Corp., Kawagoe-shi, Saitama-ken (JP)
(74) Representative: Brunner, Michael John

(57) **Abstract**

A navigation device includes measure device (1-4) for measuring current position and travel direction of a vehicle, display device (15) for displaying a map information corresponding to the detected current position of the vehicle and vehicle position mark indicating the current position and travel direction of the vehicle, measurement accuracy discriminating device (5) for discriminating the measurement accuracy of the current position and the travel direction detected by the measure device, and display control device (13), coupled to the display device and the measurement accuracy discriminating device, for varying a display mode of the vehicle position mark in accordance with the discriminated measurement accuracy. With this construction, the variation of measurement accuracy can be easily discriminated, and thus the erroneous recognition of the vehicle position can be effectively avoided.

## Description

### BACKGROUND OF THE INVENTION

### Field of the Invention:

This invention relates to a navigation device which supports driving of a vehicle such as a car or the like by displaying a current position mark indicating the current position of the vehicle on a map, and more particularly to a navigation device which displays accuracy of a measurement of a current position and a travel direction of the vehicle.

### Description of Prior Art:

A navigation device installed in a vehicle such as a car or the like has been required to accurately measure current position and travel direction of the vehicle and then accurately and rapidly display, on a display unit, the current position, the travel direction of the vehicle and other information satisfying an user's demand as a map information corresponding to the current position, a vehicle position mark or the like for assistance to a driver.

The current position and travel direction of the vehicle are calculated from electric wave transmitted from a GPS (Global Positioning System) satellite (hereinafter referred to as "GPS positioning method"), or from data of a direction sensor such as a gyro, a geomagnetic sensor or the like and a travel distance sensor for measuring a travel distance or the like, each installed in the vehicle (hereinafter referred to as "stand-alone type positioning method"). The GPS positioning method has various advantages such as that it is not required to set in advance a vehicle position on a map and that the positioning error of the vehicle position is remarkably small and accordingly high reliability can be achieved. Therefore, the GPS positioning method is very effective.

In a GPS positioning device using the GPS positioning method, when the GPS positioning device can contact with three satellites (that is, the device can receive electric signals from three satellites), a latitude/longitude data and a travel direction data can be calculated on the basis of the received signals as a two-dimensional information. Further, when the device can contact with four or more satellites, in addition to the above two-dimensional information, an altitude data can be further calculated as a three-dimensional information and output from the device. With respect to the measurement accuracy, the measurement accuracy is higher in a case where the GPS positioning device can contact with the four or more satellites (hereinafter referred to as "above-four satellite condition") than in a case where the device can contact with the three satellites (hereinafter referred to as "three-satellite condition"). The measurement accuracy is varied in accordance with the number of satellites (three or above four in the above example) which can be contacted with by the GPS positioning device. In other word, the measurement accuracy is changed over between high accuracy and low accuracy in accordance with the satellite-contacting condition. Therefore, if an user checks the vehicle position with user's sense of high accuracy although the actual measurement operation is carried out under the three-satellite condition (low-accuracy condition), there would occurs an erroneous recognition of the actual position of the vehicle. In order to avoid such an erroneous recognition of the actual vehicle position, one of display marks "2D" and "3D", respectively representing a measurement operation under the three-satellite condition or a measurement operation under the above-four satellite condition, is selectively displayed on the displayed map.

However, since an user mainly sees a current vehicle position and its neighborhood on the displayed map to check the position of his vehicle, such a display mark indicating the measurement condition is hardly noticed by the user. Accordingly, the variation of the measurement condition is frequently overlooked.

### SUMMARY OF THE INVENTION

It is an object of this invention to provide a navigation device which enables the user to easily and rapidly recognize the variation of measurement condition, in order to avoid the erroneous recognition of a vehicle position or the like.

According to one aspect of the invention, there is provided a navigation device including: measure device for measuring current position and travel direction of a vehicle, display device for displaying a map information corresponding to the detected current position of the vehicle and vehicle position mark indicating the current position and travel direction of the vehicle, measurement accuracy discriminating device for discriminating the measurement accuracy of the current position and the travel direction which is measured by the measure device, and display control device, coupled to the display device and the measurement accuracy discriminating device, for varying a display mode of the vehicle position mark in accordance with the discriminated measurement accuracy.

According to the navigation device of this invention thus constructed, the map information and the vehicle position mark indicating of the current position and travel direction of the vehicle are displayed on the basis of the current position and travel direction data measured by the detection device. A measurement condition of the detection device is monitored, on the basis of an data output from the measure device, by the measurement accuracy discriminating device at all times in order to discriminate the measurement accuracy of each of the current position and the travel direction. For example, the discrimination device discriminates whether the measurement operation is carried out under a high-accuracy measurement condition or under a low-accuracy measurement condition. Plural kinds (modes) of vehicle position marks, each indicating different measurement accuracy modes of the current position and travel direction are beforehand provided to the display device. The display device is so controlled that one vehicle position mark currently used is switched to another mode when the discrimination result of the measurement accuracy discriminating device is changed.

### BRIEF DESCRIPTION OF THE DRAWINGS

FIG. 1 is a block diagram showing an embodiment of a navigation device according to this invention;
FIG. 2 is a diagram showing a display example of a vehicle position mark in the embodiment;
FIG. 3 is a diagram showing another display example of the vehicle position mark in the embodiment;
FIG. 4 is a diagram showing still another display example of the vehicle position mark in the embodiment; and
FIG. 5 is a diagram showing still another display example of the vehicle position mark in the embodiment.

### DETAILED DESCRIPTION OF THE INVENTION

A preferred embodiment according to this invention will now be described below with reference to the accompanying drawings.

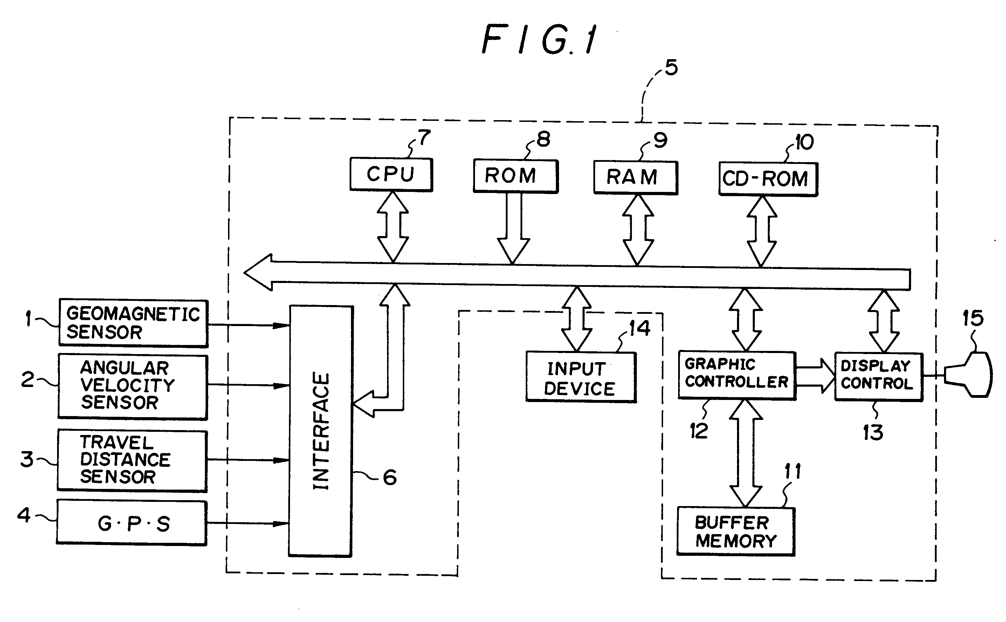

FIG. 1 is a block diagram showing an embodiment of a navigation device according to the present invention. As shown in FIG. 1, the navigation device for a vehicle includes a geomagnetic sensor 1 for outputting a direction data of the vehicle on the basis of geomagnetism (earth magnetism), an angular velocity sensor 2 for detecting an angular velocity of the vehicle, a travel-distance sensor 3 for measuring a travel distance of the vehicle and a GPS measurement device for receiving electric waves from a plurality of GPS satellites to conduct calculations based on the received signals and generating and outputting navigation data such as data of latitude, longitude, altitude and travel direction of the vehicle, the number of satellites contacted with the navigation device, etc. The navigation device further includes a system controller 5 for executing various processings such as calculation, control, etc., a key board 14 for inputting various instructions into the system controller 5, and a display 15 such as a liquid crystal display, a CRT or the like.

The system controller 5 includes an interface 6 for receiving the output signals from the geometric sensor 1, the travel distance sensor 3 and the GPS positioning device 4 and subjecting these outputs to A/D conversion, a CPU (Central Processing Unit) 7 for carrying out various calculations and controls in accordance with programs, a ROM (Read Only Memory) 8 in which various processing programs and other necessary information are beforehand stored, a RAM (Random Access Memory) 9 in and from which information required to execute the grograms are written and read, a recording medium 10 such as a CD-ROM, an IC card or the like in which digitalized map information, etc. are recorded, a buffer memory 11 such as V-RAM (video RAM) or the like for temporarily storing, as a frame buffer, an image information to be directly displayed, a graphic controller 12 for inputting graphic data such as map information into the buffer memory 11 and outputting the data stored in the buffer memory 11 as image information in response to the instruction from the CPU 7, and a display control circuit 13 for receiving the image information output from the graphic controller 12 and controlling an image display operation of the display 15 on the basis of the received image information.

When the navigation device thus constructed is activated, the system controller 5 reads out information for access of the map display information and a display information for the vehicle position mark, etc. from the recording medium 10, and then stores these information into the RAM 9. Subsequently, the system controller 5 obtains a latitude/longitude data corresponding to vehicle position information and travel direction information of the vehicle through the GPS positioning device 4, and reads out the map information corresponding to the obtained vehicle position from the recording medium 10. The read-out map information is fed to the graphic controller 12 to be displayed as the current position map on the display 15. In addition, a processing of displaying the vehicle position mark on the map is conducted on the basis of the vehicle position information and the travel direction information. Subsequently, the vehicle position information and the travel direction information are periodically obtained from the GPS positioning device 4 to conduct a renewing the display position, direction of the vehicle position mark, and the display map if necessary. Further, the output data from the geomagnetic sensor 1, the angular velocity sensor 2 and the travel distance sensor 3 are periodically read out and then subjected to a predetermined calculation to produce the vehicle position and the travel direction of the vehicle. After comparing the calculated information with the information from the GPS positioning device 4, a correction is carried out to reduce the deviation (error) between these information.

Further, in this embodiment, the system controller 5 periodically receives information of satellite-contacting condition from the GPS positioning device 4 to judge whether the vehicle position information has been calculated under a three-satellite condition (low measurement accuracy condition) where the navigation device contacts with three satellites for data transmission or under an above-four satellite condition (high measurement accuracy condition) where the navigation device contacts with four or more satellites. Simultaneously, it is also judged on the basis of the travel direction information whether the travel direction information has been calculated under the low measurement accuracy condition) or high measurement accuracy condition. When the vehicle runs at low speed, the travel direction information is output under the low measurement accuracy condition while, when the vehicle runs at high speed, the travel direction information is output under the high measurement accuracy condition.

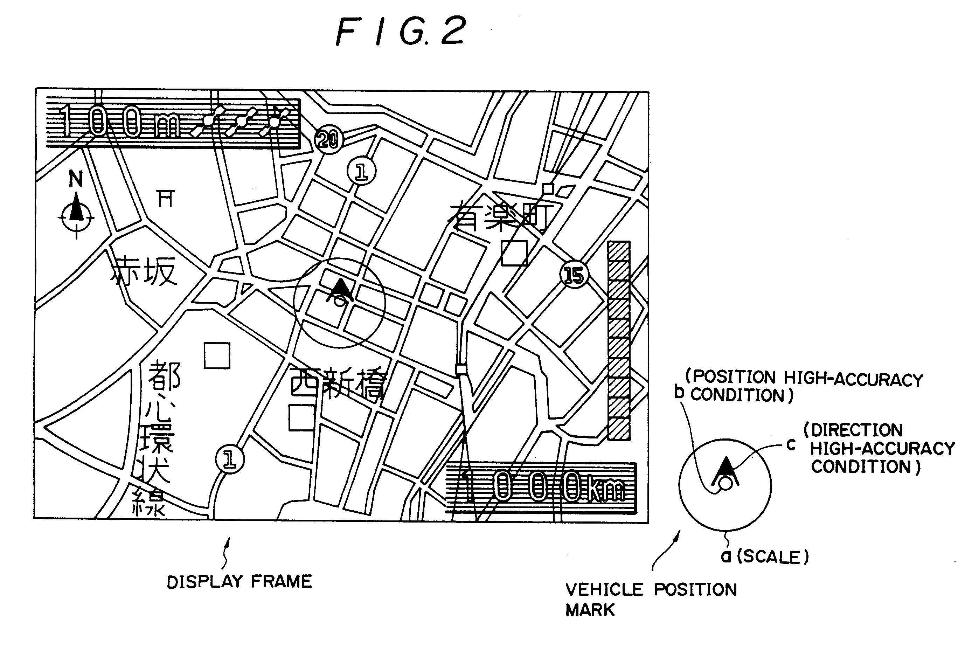

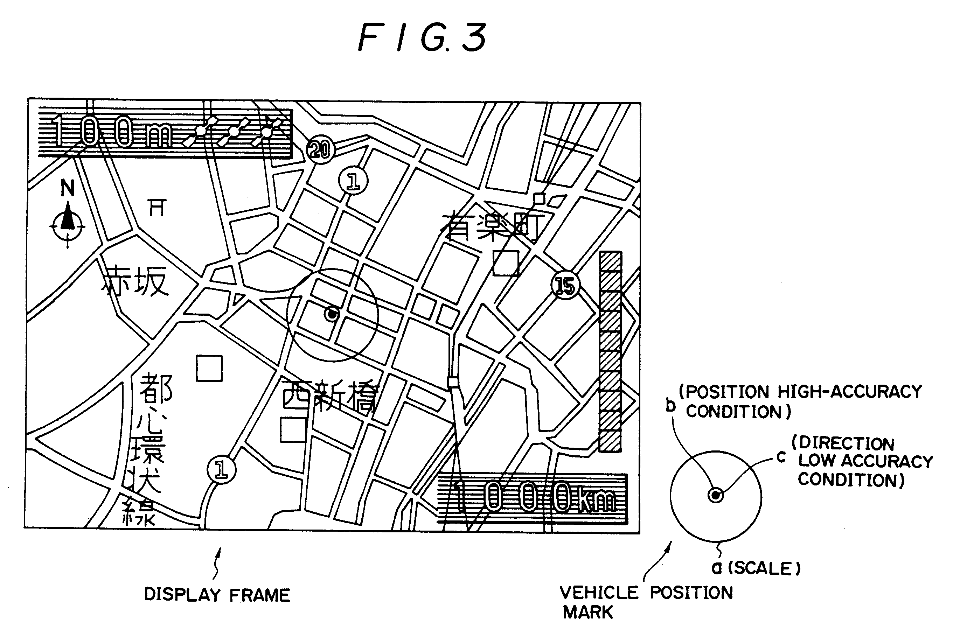

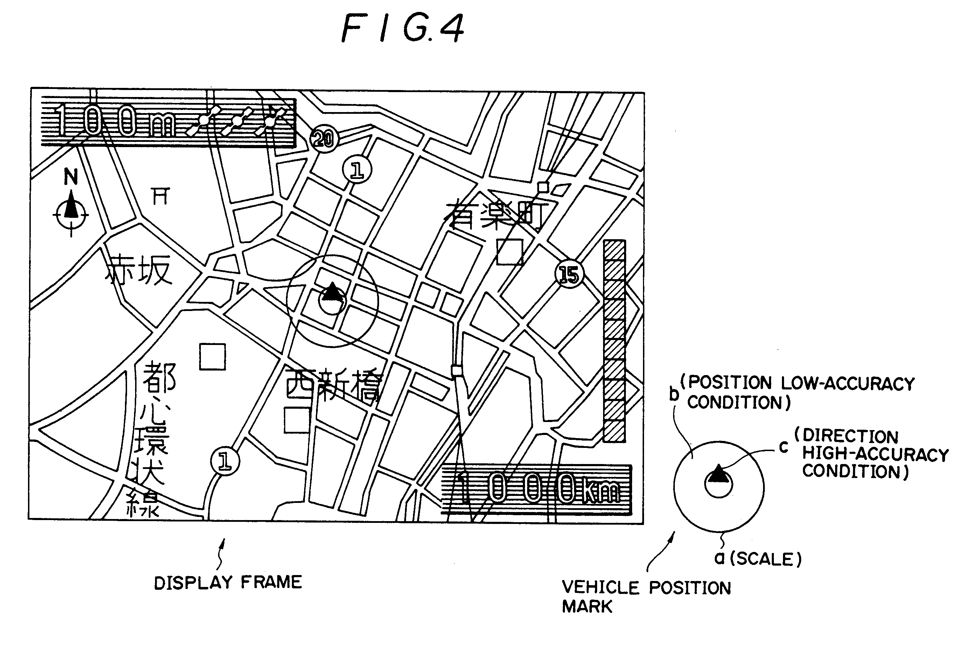

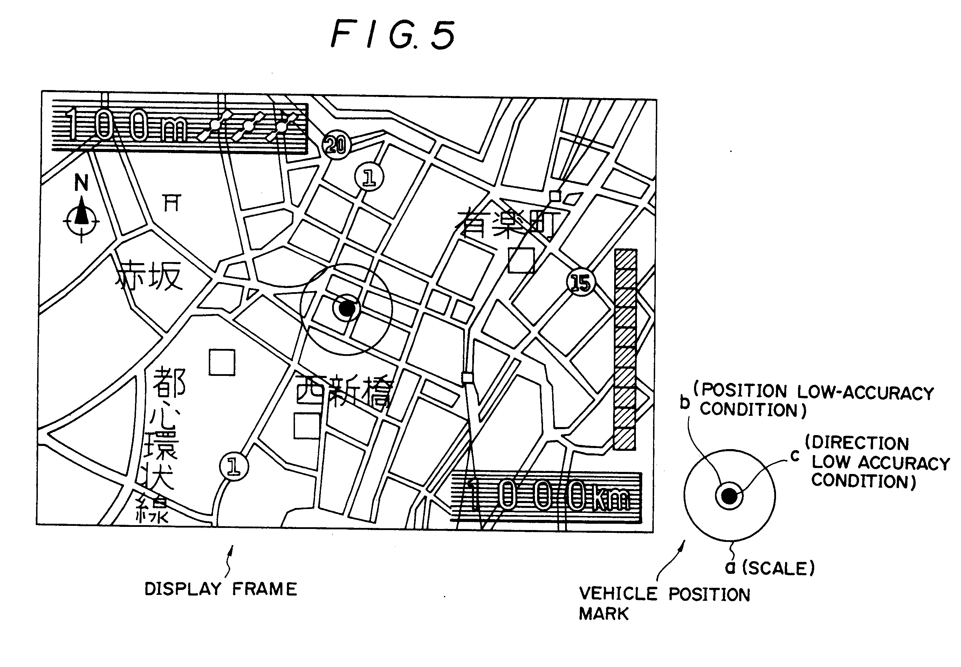

In this embodiment, four kinds of shapes are provided to the vehicle position mark, and one of these shapes is selected and displayed as the vehicle position mark in accordance with the measurement accuracy of each of the vehicle position and the travel direction. FIGS. 2 to 5 show examples of the vehicle position mark on the display map with explanatory diagrams which are located outside of the respective map frames. FIG. 2 shows the example of the vehicle position mark when both of the measurement accuracy for the vehicle position and the measurement accuracy for the travel direction are high, FIG. 3 shows the example when the measurement accuracy for the vehicle position is high and the measurement accuracy for the travel direction is low, FIG. 4 shows the example when the measurement accuracy for the vehicle position is low and the measurement accuracy for the travel direction is high, and FIG. 5 shows the example when both of the measurement accuracy for the vehicle position and the measurement accuracy for the travel direction are low. The system controller 5 selects one of the above four conditions after discriminating the measurement accuracy for each of the vehicle position and the travel direction, and carries out a switching the display of the vehicle position mark in response to the discriminated measurement condition when the measurement accuracy is varied.

In the explanatory diagrams for the vehicle position mark as shown in FIGS. 2 to 5, the reference mark "a" represents a scale circle indicating an area within a predetermined distance (for example, a circle of 100 m in radius) from the vehicle position. The radius of the scale circle "a" is invariable and is a fixed value. The reference mark "b" represents a circle indicating the accuracy of a measured vehicle position. The display of the circle "b" is switched as follows. As shown in FIGS. 2 and 3, when the measurement accuracy of the vehicle position is high, that is, when the measurement operation is carried out using four or more GPS satellites, the measurement accuracy is represented by a small circle. On the other hand, as shown in FIGS. 4 and 5, when the measurement accuracy of the vehicle position is low, that is, the measurement operation is carried out using three GPS satellites, it is represented by a large circle.

The reference mark "c" represents the measurement accuracy of the travel direction of the vehicle. The display of the travel direction is switched as follows. As shown in FIGS. 2 and 4, when the measurement accuracy of the travel direction is high, the travel direction is displayed with the shape of an isosceles triangle. On the other hand, as shown in FIGS. 3 and 5, when the measurement accuracy of the travel direction is low, the travel direction is displayed with a black circle which indicates no direction.

As described above, according to this embodiment, the measurement accuracy for the vehicle position and the measurement accuracy for the travel direction are represented by varying the shape and size of the vehicle position mark. Since the user frequently fixes his eyes on the vehicle position mark and its neighborhood on the display map, the navigation device of this embodiment enables the user to more easily recognize the measurement accuracy for each of the vehicle position and the travel direction than the conventional navigation device in which the measurement accuracy for each of the vehicle position and the travel direction is represented with a symbol or the like located on the peripheral portion of the map. Further, the navigation device of this embodiment enables the user to easily recognize the variation of the measurement accuracy by seeing only the vehicle position mark on the display.

In the above embodiment, the measurement accuracy of the vehicle position and the measurement accuracy of the travel direction are represented with the size of a circle and the display shape of a triangle, respectively. However, this invention is not limited to the above display style, and any type of display such as changing colors etc. may be used insofar as the variation of the measurement accuracy is easily recognizable based on the display style.

In addition, in the above embodiment, the measurement accuracy of the vehicle position is determined on the basis of the number of contacted satellites, however, this invention is not limited to this method. The GPS positioning method is a very effective, but has a disadvantage that a positioning operation can not be carried out in buildings, in a tunnel or beside woods. Therefore, this disadvantage of the GPS positioning method has been compensated by using the GPS positioning method and the stand-alone type positioning method in combination. However, the stand-alone type positioning method has a disadvantage that a detection data does not always have high accuracy due to an accumulated error, temperature variation, a condition inside of a vehicle, etc. Therefore, the positioning operation can not always be performed with high accuracy even when the two types of positioning methods are used in combination to compensate with each other. Accordingly, there frequently occurs a case where the measurement accuracy for each of the vehicle position and the travel direction is reduced due to various environments and conditions in the actual travelling process. In order to overcome this problem, as an application of the present invention, the measurement accuracy may be divided into multiple levels form low measurement accuracy level to high measurement accuracy level and discriminated as one of the levels. In this case, the size or shape of a circle displayed may be varied in correspondence with the divided multiple measurement accuracy levels. The same manner is applicable to the measurement accuracy of the travel direction.

As described above, according to the navigation device of this invention, the measurement accuracy condition can be easily and rapidly recognized. In addition, the variation of the measurement accuracy can be easily recognized by seeing only the current vehicle position mark on the display, so that the erroneous recognition of the current position can be avoided.

## Claims

1. A navigation device comprising:
measure means (1-4) for measuring current position and travel direction of a vehicle;
display means (15) for displaying a map information corresponding to the detected current position of the vehicle and vehicle position mark indicating the current position and travel direction of the vehicle;
measurement accuracy discriminating means (5) for discriminating the measurement accuracy of the current position and the travel direction detected by said measure means; and
display control means (13), coupled to said display means and said measurement accuracy discriminating means, for varying a display mode of the vehicle position mark in accordance with the discriminated measurement accuracy.

2. A navigation device according to claim 1, wherein said measure means comprises a GPS measurement device (4).

3. A navigation device according to claim 2, wherein said measurement accuracy discriminating means discriminates a measurement accuracy of the current position of the vehicle on the basis of the number of satellites contacting with the GPS measurement device and discriminates the travel direction of the vehicle on the basis of the running speed information of the vehicle produced by the GPS measurement device.

4. A navigation device according to claim 1, wherein said display control means varies the display mode by changing shape, size or color of vehicle position mark indicating current position of the vehicle.

5. A navigation device according to claim 1, wherein said measure means comprises a geomagnetic sensor (1), angular velocity sensor (2) and a travel distance sensor(3).

6. A navigation device according to claim 1, wherein said measure means comprises a geomagnetic sensor, angular velocity sensor, a travel distance sensor and a GPS measuring device.
